(19) Europäisches Patentamt
European Patent Office
Office européen des brevets

(11) Publication number: **0 312 564 B1**

(12) # EUROPEAN PATENT SPECIFICATION

(45) Date of publication of patent specification: **26.06.91 Bulletin 91/26**

(51) Int. Cl.$^5$: **A23G 1/00**

(21) Application number: **88903876.6**

(22) Date of filing: **26.04.88**

(86) International application number: **PCT/GB88/00321**

(87) International publication number: **WO 88/08253 03.11.88 Gazette 88/24**

(54) **VISCOSITY REDUCING AGENT.**

(30) Priority: **28.04.87 GB 8710041**

(43) Date of publication of application: **26.04.89 Bulletin 89/17**

(45) Publication of the grant of the patent: **26.06.91 Bulletin 91/26**

(84) Designated Contracting States: **AT BE CH DE FR GB IT LI LU NL SE**

(56) References cited:
**BE-A- 636 890**
**DE-A- 3 210 356**
**FR-A- 855 572**
**FR-A- 2 006 363**
**FR-A- 2 114 637**
**GB-A- 855 310**
**Confectionery Production, volume 41, no. 9. September 1975, H.R. Riedel: "Malt powder in malt chocolates and sweets" pages 437-438, see page 437, column 2**

(73) Proprietor: **CADBURY SCHWEPPES PLC**
**Bournville**
**Birmingham, B30 2LU (GB)**

(72) Inventor: **EVANS, Roger**
**1 Chelwood Road Earley**
**Reading Berkshire RG6 2QG (GB)**
Inventor: **SMITH, Ian, Humphrey**
**Woodlands Flowers Hill**
**Pangbourne Reading, Berkshire RG8 7BD (GB)**
Inventor: **JEE, Michael, Henry**
**72 Underwood Road Southcote**
**Reading Berkshire RG3 3NF (GB)**
Inventor: **GIBSON, Raymond, Kingsley**
**26 Kelsey Avenue Finchampsted, Wokingham**
**Berkshire RG11 4TZ (GB)**
Inventor: **SANDERS, Nigel, Hugh**
**2 Water Road Reading**
**Berkshire RG3 2NN (GB)**

(74) Representative: **Pearce, Anthony Richmond et al**
**MARKS & CLERK Alpha Tower Suffolk Street**
**Queensway Birmingham B1 1TT (GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This invention relates to a viscosity-reducing agent which is primarily intended for use in chocolate manufacture.

It is common practice to use a viscosity-reducing agent in the manufacture of chocolate to assist in processing of the chocolate. Viscosity-reducing agents, or emulsifiers as they are sometimes called, are used in chocolate to enable the amount of expensive cocoa butter to be reduced. A known emulsifier for this purpose is soya lecithin which is a phospholipid emulsifier. Another type of emulsifier is a polyglycerolpolyricinoleate (PGPR) of which an emulsifier commercially available as Admul WOL is an example. These two types of known emulsifier differ in the way they change the viscosity of molten chocolate.

There are two major differences which can be identified between the effects of soya lecithin and PGPR in, for example, molten dark chocolate. The first is that PGPR continues to reduce the viscosity at low shear rates (less than about 1 $s^{-1}$) over the entire concentration range from 0.01 to 1% addition. In contrast, increasing the concentration of soya lecithin initially reduces these low shear rate viscosities to minimum values at about 0.20-0.25% addition levels and thereafter these viscosities increase. The second difference is in the effects at medium to high shear rates (7.9 to 100 $s^{-1}$). In this shear rate region, chocolate containing concentrations of 0.5% PGPR and above show Newtonian behaviour between 7.9 and 100 $s^{-1}$. Data in the same shear rate region for chocolate containing 0.1-1% soya lecithin show viscosity still falling to values which are eventually lower than those for chocolate containing the equivalent quantity of PGPR.

Synthesized emulsifiers having a similar effect to soya lecithin are also known, such synthesized emulsifiers being produced, for example, by glycerolysis and phosphorylation of a triglyceride starting material such as partially hardened rape-seed oil. However, such synthesized emulsifiers differ from soya lecithin in that the viscosities at low shear rates do not tend to rise again from the minimum values as the emulsifier concentration is increased.

We have now found that viscosity-reducing agents for chocolate can be extracted from oats and that, by varying the extraction conditions, agents which simulate the viscosity-reducing characteristics of the PGPR type or the soya or synthesized lecithin-type emulsifiers can be prepared.

Processes for the treatment of comminuted oats for the purpose of preparing oat bran, oat flour and oat oil are disclosed in GB-A-1527101 and GB-A-1552012. In such publications, the recovery of an oil fraction is disclosed by extracting comminuted oats with a solvent such as hexane, although the use of alcohols having 1-4 carbon atoms is disclosed as a possibility, and recovery of the oil from the solvent extract by complete removal of the hexane. It is also disclosed in such publications that the oil obtained may be turbid and that such oil may be clarified by mixing with isopropanol, agitating and then removing any solid material e.g. by centrifuging. It is also disclosed in such documents that the solids removed on centrifuging are believed to contain a significant amount of phospholipids and may be suitable for use, for example, as emulsifiers. However, no indication is given as to the intended field of use of such emulsifiers. Indeed, if hexane is used to extract the oats and the resulting turbid oil is centrifuged and degummed, then we have found that neither the remaining oil nor the gum are sufficiently active as viscosity reducing agents in chocolate.

We have found that viscosity-reducing agents having properties similar to soya lecithin in chocolate compositions can be produced by a single extraction of oats using a permitted polar organic solvent.

Therefore, according to one aspect of the present invention, there is provided a chocolate composition containing a viscosity-reducing agent obtainable-by extraction of oats using a permitted polar solvent (eg a permitted aliphatic alcohol, preferably an alcohol having at least 2 carbon atoms, most preferably ethanol or isopropanol) to produce a polar solvent extract, and separation of an oil from the polar solvent extract, said oil being the viscosity-reducing agent.

It has also been found that if the polar solvent extract is extracted with a different polar solvent eg methanol followed by evaporation of the latter, a material is yielded which has properties similar to that of a PGPR-type emulsifier when included in chocolate. Analysis of the methanol extract has shown that there are group of glycolipids responsible for the observed viscosity-reducing behaviour. These glycolipids are derivatives of glycerol with a digalactosyl residue attached to one of the primary hydroxyls of the glycerol molecule. The remaining two glycerol hydroxyls are esterified with fatty acids.

One or more of these fatty acids is an unsaturated hydroxy fatty acid which is esterified through the hydroxyl group with a further fatty acid. An example of the formula of one of these rheologically active glycolipids is given below :

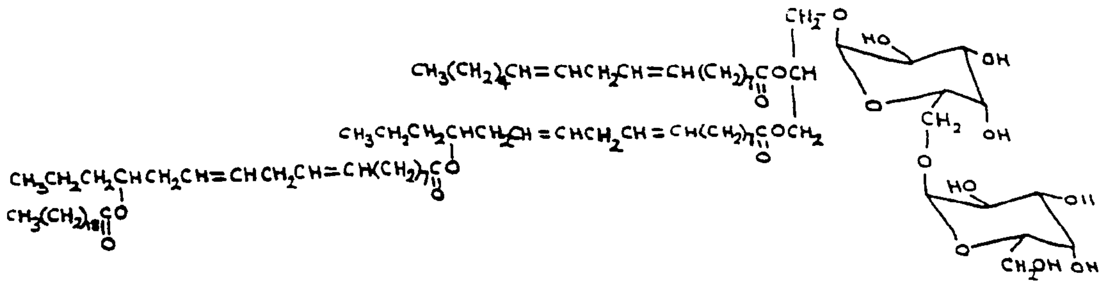

In the formula above, it will be seen that the further fatty acid is the same as one of the unsaturated fatty acid attached to the glycerol moiety.

The rheologically active glycolipds may be expressed by the following general formula :

$$\begin{array}{l} CH_2-O-R_1 \\ | \\ CH-O-R_2 \\ | \\ CH_2-O-R_3 \end{array}$$

wherein $R_1$ is a digalactosyl residue, and each of $R_2$ and $R_3$, which may be the same or different, is a fatty acid residue, preferably an unsaturated fatty acid residue ; provided that at least one of $R_2$ and $R_3$ is an unsaturated hydroxy fatty acid residue ($F_1$) which is esterified through the hydroxy group thereof with a further fatty acid residue ($F_2$) which may itself be unsaturated and which in tum may have a hydroxy group optionally esterified by another fatty acid residue ($F_3$). The fatty acid residue $F_3$ may be a saturated fatty acid. $F_1$ and $F_2$ may be the same. In the case where only one of $R_2$ and $R_3$ is as defined above, the other of $R_2$ and $R_3$ may be based on the same fatty acid as $F_1$, although it need not be a hydroxy acid residue.

The present invention comprehends the use of one or more such rheologically active glycolipds as an emulsifier irrespective of the route production or isolation thereof and the raw material used.

According to another aspect of the present invention, there is provided a method of preparing a viscosity-reducing agent for chocolate, comprising the steps of extracting oats using a permitted non-polar organic solvent, re-extracting the oats using a permitted polar solvent to produce a polar solvent extract, and separating an oil from said polar solvent extract.

In said another aspect of the present invention as defined in the last preceding paragraph, the oil which has been separated from the polar solvent extract can be used directly as a viscosity-reducing agent and has properties close to that of a PGPR-type emulsifier. Such a viscosity-reducing agent is particular effective at low shear rates.

The non-polar solvent is preferably a permitted alkane, more preferably hexane. The polar solvent is preferably a permitted aliphatic alcohol, most preferably ethanol or isopropanol.

In the method of the present invention using non-polar and polar solvents, the oil is preferably separated from the polar organic solvent by evaporation of part of the solvent from the solvent extract until the oil separates from the latter. The material which remains dissolved in the solvent after partial evaporation has been found to be relatively inactive as a viscosity-reducing agent. The oil which constitutes the viscosity-reducing agent has limited solubility in the polar organic solvent.

The ratio of solvent to oats is not particularly critical. For a soxhlet-type extraction, 3-6 litres of solvent per kg of oats can be used. With solvent extraction at room temperature, 2 litres solvent per kg of oats can be used.

Extraction using the polar organic solvent may be effected at a temperature between room temperature and the boiling point of the solvent. To maximise the efficiency of the extraction, the use of comminuted oats is preferred.

Also according to the present invention, there is provided a viscosity-reducing agent for chocolate obtainable by extraction of oats using a permitted non-polar organic solvent ; re-extraction of the oats using a permitted polar solvent to produce a polar solvent extract ; and separation of an oil from the polar solvent extract.

Also according to the present invention, there is provided a chocolate composition containing a viscosity-reducing agent as defined in the last preceding paragraph.

The concentrations at which the viscosity-reducing agents according to the present invention are incorporated into chocolate compositions are similar to those at which the conventional emulsifiers discussed above can be employed, e.g. typically 0.25-0.5% by weight of the chocolate. The use of such viscosity-reducing agents

enables the amount of cocoa butter to be reduced by up to about 13% of the total fat present.

Both aspects of the present invention are applicable to dark, blended, milk or white chocolate compositions. Such chocolate compositions all contain sugar, non-fat cocoa solids and cocoa butter and typically have the following ingredients (in percent by weight) :

| | Chocolate Type | | | |
|---|---|---|---|---|
| Ingredient | Dark | Blended | Milk | White |
| Sugar | 55 | 50 | 46 | 48 |
| Non-fat cocoa solids | 16 | 10 | 5 | - |
| Cocoa butter | 21.25 | 22.25 | 19.25. | 19.25 |
| Vegetable fat | 4.5 | 4.5 | 4.5 | 4.5 |
| Non-fat Milk solids | - | 9 | 18 | 20 |
| Milk fat | 3 | 4 | 7 | 8 |
| Emulsifier | 0.25 | 0.25 | 0.25 | 0.25 |

Examples of the present invention will now be described. In the examples and accompanying tables, evaluation of the viscosity-reducing properties was effected using dark chocolate compositions A and B and milk chocolate composition C. Chocolate samples A, B and C initially contained 32 wt%, 31.9 wt% and 33 wt% fat respectively and, in each case, the combined fat plus emulsifier content was raised a constant 1 wt% by incorporation of 0.5 wt% of emulsifier or oat fraction mixed with 0.5 wt% cocoa butter. The control sample with no emulsifier was prepared by addition of 1 wt% cocoa butter in order to distinguish genuine activity from dilution effects. Although soya lecithin appears to be less effective in reducing the viscosity of milk chocolate than dark chocolate, particularly at low shear rates, the general effects of the emulsifiers show the same trends in both systems.

<u>EXAMPLE 1</u>

Rolled oats (830 g) sold as "Jumbo Oats" by Morning Foods, were loosely packed into a glass column (72 cm × 5.5 cm i.d.) and then continuously extracted at room temperature by circulating isopropanol (1750 ml) through the column for 1 hour. The column was allowed to drain and the extraction procedure repeated a further three times using a fresh charge of solvent each time. The isopropanol extracts were concentrated under vacuum to yield four fractions (fractions 1a-1d). Each fraction was incorporated in emulsifier free dark chocolate at a concentration of 0.5%. A summary of the rheological properties of fractions 1a-1d is given in Table 1. The yield of each fraction is detailed below : (all percentages by weight)

| Fraction | Yield (g) | Yield (% of Oats) |
|---|---|---|
| 1a | 41.5 | 5 |
| 1b | 9.1 | 1.1 |
| 1c | 2.5 | 0.3 |
| 1d | 1.7 | 0.2 |
| Total | 54.8 | 6.6 |

EXAMPLE 2

Rolled Jumbo oats (820 g) were loosely packed into a glass column (72 cm × 5.5 cm i.d.) and then continuously extracted at room temperature by circulating ethanol (1750 ml) through the column for 1 hour 15 minutes. The column was allowed to drain and the extraction procedure repeated a further four times using a fresh charge of solvent each time. The ethanol extracts were concentrated under vacuum to yield five oil fractions (fractions 2a-2e). Each fraction was incorporated into emulsifier-free dark chocolate at 0.5%. A summary of the rheological properties of fractions 2a-2e is given in Table 1. The yield of each of the fractions is detailed below : (all percentages by weight)

| Fraction | Yield (g) | Yield (% of Oats) |
|---|---|---|
| 2a | 19.8 | 2.4 |
| 2b | 10.7 | 1.3 |
| 2c | 8.2 | 1.0 |
| 2d | 13.1 | 1.6 |
| 2e | 2.5 | 0.3 |
| Total | 54.3 | 6.6 |

EXAMPLE 3

Rolled Jumbo Oats (25 kg) were loosely packed into a glass column [9 inch (23 cm) diameter] and then continuously extracted for 40 minutes with isopropanol (60 litres) heated to 70°C. The column was allowed to drain and the extraction procedure repeated a further two times using a fresh charge of solvent each time. The isopropanol extracts were concentrated under vacuum to yield 1.6 kg of an oil (fraction 3a). A summary of the rheological properties of fraction 3a are given in Table 1.

Following removal of the isopropanol, the oil (1.6 kg) was thoroughly mixed with methanol (7.5 litres). On standing the mixture separated into two layers. The methanolic upper layer was removed and the lower layer was then extracted a further two times with methanol (7.5 litres). The three methanol extracts were combined and the methanol removed under vacuum to yield 424 g of a viscous material (fraction 3b). The material which did not extract into the methanol (fraction 3c, 1.1 kg) was mainly composed of triglycerides. A summary of the rheological properties of fractions 3b and 3c are given in Table 1.

EXAMPLE 4

Rolled Jumbo oats (650 g) were milled to give a coarse flour which was then extracted with 3000 ml of ethanol in a soxhlet apparatus for 16 hours. The ethanol extract was concentrated under vacuum to approximately 500 ml at which point 26 g (4% of the oats) of an oil fraction had separated from the ethanol. This oil fraction (fraction 4a) was incorporated into emulsifier free dark chocolate B at a concentration of 0.5%. A summary of the rheological properties of fraction 4a is given in Table 1. Removal of the remaining solvent yielded 11.7 g (1.8% of the oats) of a second fraction (fraction 4b) which did not effect a significant viscosity reduction in chocolate.

EXAMPLE 5

Rolled Jumbo oats (650g) were milled and the flour extracted with 3000 ml of n-hexane in a soxhlet apparatus for 16 hours. The hexane extract was evaporated to yield an oil containing a suspension of solid matter. The solid was removed by centrifugation and discarded. Water was added to the clarified oil to a concentration of 1.5%. The mixture was shaken and left at room temperature for 4 hours during which time a gum precipitated. The gum was recovered by centrifugation and dried under vacuum. Neither the water-washed oil (fraction 5a) nor the gum (fraction 5b) effected a significant viscosity reduction in chocolate.

The hexane-extracted oats were re-extracted in the soxhlet apparatus with 3000 ml of ethanol for 16 hours. The ethanol extract was concentrated under vacuum to approximately 100 ml at which point an oil fraction had separated from the ethanol. This oil fraction (fraction 5c) was incorporated into emulsifier-free dark chocolate A at a concentration of 0.5%. A summary of the rheological properties of fraction 5c is given in Table 2. Removal of the remaining solvent yielded a fourth fraction (fraction 5d) which did not effect a significant viscosity reduction in chocolate. The yields of the various fractions were as follows : (all percentages by weight)

| Fraction | Yield (g) | Yield (% of Oats) |
|---|---|---|
| Fraction 5a | 45.5 | 7 |
| Fraction 5b | 3.9 | 0.6 |
| Fraction 5c | 7.8 | 1.2 |
| Fraction 5d | 4.6 | 0.7 |
| Total | 61.8 | 9.5 |

EXAMPLE 6

Fractions of oats were prepared by extraction of rolled oats with ethanol, as described in Example 2. However, in this case, all the fractions were combined into one bulk sample (fraction 6a). A similar extraction with isopropanol, as described in Example 1, yielded a bulk extract, fraction 6b. As described in Example 5, oats were extracted with hexane and the residue re-extracted with ethanol. This produced a second sample of material similar to fraction 1c, designated fraction 6c.

Fractions 6a, 6b and 6c were each introduced into emulsifier-free milk chocolate C at a concentration of 0.5%. A summary of the rheological properties of milk chocolate C containing fractions 6a-c are given in Table 3 below.

TABLE 1

| Dark Chocolate A containing | Viscosity (Pas) at 40°C and at shear rates 0.5 | 1.0 | 7.9 | 25.1 | 100 $s^{-1}$ |
|---|---|---|---|---|---|
| No emulsifier | 96 | 63 | 17 | 10 | 6.7 |
| Soya lecithin | 45 | 27 | 5.5 | 3.5 | 2.6 |
| PGPR (Admul WOL) | 15 | 6.1 | 3.2 | 3.2 | 3.2 |
| Fraction 1a | 37 | 26 | 7.4 | 5.0 | 3.8 |
| Fraction 1b | 36 | 25 | 6.8 | 4.7 | 3.7 |
| Fraction 1c | 24 | 17 | 5.5 | 3.9 | 3.3 |
| Fraction 1d | 24 | 16 | 5.1 | 3.8 | 3.3 |
| Fraction 2a | 32 | 20 | 5.5 | 3.9 | 2.9 |
| Fraction 2b | 37 | 26 | 6.7 | 4.7 | 3.8 |
| Fraction 2c | 46 | 32 | 7.9 | 5.7 | 4.6 |
| Fraction 2d | 46 | 32 | 9.6 | 6.5 | 4.8 |
| Fraction 2e | 41 | 28 | 9.0 | 6.2 | 4.8 |
| Fraction 3a | 61 | 37 | 6.4 | 4.4 | 3.4 |
| Fraction 3b | 25 | 16 | 3.1 | 2.4 | 2.0 |
| Fraction 3c | 81 | 55 | 11 | 7.3 | 5.4 |
| Fraction 4a | 42 | 19 | 5.6 | 3.6 | 2.8 |

TABLE 2

| Dark Chocolate B containing | Viscosity (Pas) at 40°C and at shear rates 0.5 | 1.0 | 7.9 | 25.1 | 100 $s^{-1}$ |
|---|---|---|---|---|---|
| No emulsifier | 82 | 52 | 15 | 7.2 | 5.7 |
| Soya lecithin | 36 | 21 | 5.0 | 2.8 | 1.9 |
| PGPR (Admul WOL) | 8.5 | 6.2 | 3.3 | 3.3 | 3.3 |
| Fraction 5c | 17 | 7.1 | 2.6 | 2.1 | 2.0 |

TABLE 3

| Milk Chocolate C containing | Viscosity (Pas) at 40°C and at shear rates 0.5 | 1.0 | 7.9 | 25.1 | 100 $s^{-1}$ |
|---|---|---|---|---|---|
| No emulsifier | 83 | 43 | 6.8 | 4.0 | 2.8 |
| Soya lecithin | 73 | 40 | 6.0 | 3.3 | 2.0 |
| PGPR (Admul WOL) | 27 | 15 | 2.6 | 2.2 | 2.1 |
| Fraction 6a | 55 | 34 | 6.6 | 3.5 | 2.3 |
| Fraction 6b | 55 | 30 | 5.5 | 2.9 | 2.0 |
| Fraction 6c | 40 | 21 | 3.7 | 1.9 | 1.7 |

In addition to the rheological data for the active oat fractions detailed in the Examples, Tables 1, 2 and 3 also contain comparable data for no emulsifier, soya lecithin and PGPR.

Oat fraction 5c (Table 2) reduces the low shear rate chocolate viscosities to values which are considerably less than for soya lecithin but not quite as low as for PGPR. At high shear rates, the viscosities of chocolate containing this oat fraction are closer to those for chocolate containing soya lecithin rather than PGPR. Fraction 5c in particular gives rise to almost Newtonian behaviour over the medium to high shear rate range (7.9-100$s^{-1}$) which again is characteristic of PGPR.

The performance of oat fraction 1a (Table 1) is likewise very similar to that of PGPR at low and medium shear rate but tends more towards soya lecithin type behaviour at high shear rates. Oat fraction 1b gives viscosity characteristics very similar to those for soya lecithin over the entire shear rate range. In general, the behaviour of oat fractions 2a to 2e and 1a to 1d resembles that of soya lecithin. However, some of these fractions are more effective than soya lecithin at low shear rates e.g. 2a, 1c and 1d.

The effect of oat fractions 6a-6c on the rheological properties of milk chocolate (Table 3) closely follow the dark chocolate results given in Examples 1-5. Fractions 6a and 6b resemble soya lecithin more than PGPR in their effects on the rheological properties of milk chocolate. Fraction 6c reduces the low shear rate viscosities to values between those of soya lecithin and PGPR, and the medium to high shear rate viscosities (25.1-100$s^{-1}$) to values slightly lower than those of either soya lecithin or PGPR. As in the case of fraction 5c in dark chocolate, fraction 6c gives rise to almost Newtonian behaviour over the higher shear rate range in milk chocolate, once again resembling PGPR.

The term "permitted" as used herein in relation to the solvent used for extraction means a solvent which is permitted for use in the preparation of ingredients for the food concerned according to the regulations of the country or countries in which the food is to be sold and consumed.

**Claims**

1. A chocolate composition containing a viscosity-reducing agent obtainable by extraction of oats using a permitted polar solvent to produce a polar solvent extract, and separation of an oil from the polar solvent extract, said oil being the viscosity-reducing agent.

2. A chocolate composition as claimed in claim 1, wherein the permitted polar solvent is an aliphatic alcohol.

3. A chocolate composition as claimed in claim 1, wherein the permitted polar solvent is ethanol or propanol.

4. A chocolate composition as claimed in claim 1, 2 or 3, wherein the polar solvent extract is extracted with a different polar solvent followed by evaporation of the latter.

5. A chocolate composition as claimed in claim 4, wherein said different polar solvent is methanol.

6. A method of preparing a chocolate composition comprising including in a mixture containing sugar, non-fat cocoa solids and cocoa butter and, optionally, vegetable fat, non-fat milk solids and milk fat, an effective amount of a viscosity-reducing agent obtainable by extraction of oats using a permitted polar solvent to produce a polar solvent extract, and separation of an oil from the polar solvent extract, said oil being the viscosity-reducing agent.

7. A method of preparing a viscosity-reducing agent for chocolate, comprising the steps of extracting oats using a permitted non-polar organic solvent, re-extracting the oats using a permitted polar solvent to produce a polar solvent extract, and separating an oil from said polar solvent extract.

8. A method as claimed in claim 7 wherein the non-polar solvent is a permitted alkane.

9. A method as claimed in claim 8, wherein the permitted alkane is hexane.

10. A method as claimed in any one of claims 7 to 9, wherein the non-polar solvent is a permitted aliphatic alcohol.

11. A method as claimed in claim 10, wherein the aliphatic alcohol is ethanol or isopropanol.

12. A method as claimed in any one of claims 7 to 11, wherein the oil is separated from the polar organic solvent by evaporation of part of the solvent from the solvent extract until the oil separates from the latter.

13. A viscosity-reducing agent for chocolate obtainable by extraction of oats using a permitted non-polar organic solvent ; re-extraction of the oats using a permitted polar solvent to produce a polar solvent extract ; and separation of an oil from the polar solvent extract.

14. A chocolate composition containing a viscosity-reducing agent as claimed in claim 13.

15. A process for the preparation of a viscosity-reducing agent comprising the steps of extracting oats using a permitted aliphatic alcohol having at least two carbon atoms to produce an alcohol extract, extracting the alcohol extract with methanol to produce a methanol extract, and evaporating methanol from the methanol extract to produce the viscosity-reducing agent.

16. A process as claimed in claim 16, wherein said aliphatic alcohol having at least 2 carbon atoms is ethanol.

17. A process as claimed in claim 15, wherein said aliphatic alcohol having at least 2 carbon atoms is isopropanol.

18. A viscosity-reducing agent obtainable by the process as claimed in claim 15, 16 or 17, said agent containing at least one rheologically active glycolipid having the general formula :

$$\begin{array}{l} CH_2-O-R_1 \\ | \\ CH-O-R_2 \\ | \\ CH_2-O-R_3 \end{array}$$

wherein $R_1$ is a digalactosyl residue, and each of $R_2$ and $R_3$, which may be the same or different, is a fatty acid residue ; provided that at least one of $R_2$ and $R_3$ is an unsaturated hydroxy fatty acid residue ($F_1$) which is esterified through the hydroxy group thereof with a further fatty acid residue ($F_2$) which may itself be unsaturated and which in turn may have a hydroxy group optionally esterified by another fatty acid residue ($F_3$) ;

the fatty acid residue $F_3$ may be a saturated fatty acid ;

$F_1$ and $F_2$ may be the same ;

in the case where only one of $R_2$ and $R_3$ is as defined above, the other of $R_2$ and $R_3$ may be based on the same fatty acid as $F_1$, although it need not be a hydroxy acid residue.

19. A viscosity-reducing agent as claimed in claim 18, wherein each of $R_2$ and $R_3$ is an unsaturated fatty acid residue.

## Ansprüche

1. Schokolademasse, enthaltend ein Viskositäts-Reduktionsmittel, das erhalten ist durch Extraktion von Hafer unter Einsatz eines zulässigen polaren Lösungsmittels unter Bildung eines polaren Lösungsmittelextrakts und Abtrennen eines Öls aus dem polaren Lösungsmittelextrakt, wobei dieses Öl das Viskositäts-Reduktionsmittel ist.

2. Schokolademasse nach Anspruch 1, **dadurch gekennzeichnet**, daß das zulässige polare Lösungsmittel ein aliphatischer Alkohol ist.

3. Schokolademasse nach Anspruch 1, **dadurch gekennzeichnet**, daß das zulässige polare Lösungsmittel Ethanol oder Propanol ist.

4. Schokolademasse nach einem der Ansprüche 1, 2 oder 3, **dadurch gekennzeichnet**, daß der polare Lösungsmittelextrakt mit einem anderen polaren Lösungsmittel extrahiert und letzteres anschließend verdampft wird.

5. Schokolademasse nach Anspruch 4, **dadurch gekennzeichnet**, daß das andere polare Lösungsmittel Methanol ist.

6. Verfahren zur Herstellung einer Schokolademasse, **gekennzeichnet durch** Einbringen in ein Gemisch, das Zucker, entölte Kakao-Trockenmasse und Kakaobutter sowie fakultativ Pflanzenfett, entfettete Milch-Trockenmasse und Milchfett enthält, einer wirksamen Menge eines Viskositäts-Reduktionsmittels, das erhalten ist durch Extraktion von Hafer unter Einsatz eines zulässigen polaren Lösungsmittels unter Bildung eines polaren Lösungsmittelextrakts und Abtrennen eines Öls aus dem polaren Lösungsmittelextrakt, wobei das Öl das Viskositäts-Reduktionsmittel ist.

7. Verfahren zur Herstellung eines Viskositäts-Reduktionsmittels für Schokolade, **gekennzeichnet durch** die folgenden Schritte :

Extrahieren von Hafer unter Einsatz eines zulässigen nichtpolaren organischen Lösungsmittels, Nachextrahieren des Hafers unter Einsatz eines zulässigen polaren Lösungsmittels unter Bildung eines polaren Lösungsmittelextrakts und Abtrennen eines Öls aus dem polaren Lösungsmittelextrakt.

8. Verfahren nach Anspruch 7, **dadurch gekennzeichnet**, daß das nichtpolare Lösungsmittel ein zulässiges Alkan ist.

9. Verfahren nach Anspruch 8, **dadurch gekennzeichnet**, daß das zulässige Alkan Hexan ist.

10. Verfahren nach einem der Ansprüche 7-9, **dadurch gekennzeichnet**, daß das nichtpolare Lösungsmittel ein zulässiger aliphatischer Alkohol ist.

11. Verfahren nach Anspruch 10, **dadurch gekennzeichnet**, daß der aliphatische Alkohol Ethanol oder Isopropanol ist.

12. Verfahren nach einem der Ansprüche 7-11, **dadurch gekennzeichnet**, daß das Öl aus dem polaren organischen Lösungsmittel durch Verdampfen eines Teils des Lösungsmittels aus dem Lösungsmittelextrakt, bis sich das Öl davon abscheidet, abgetrennt wird.

13. Viskositäts-Reduktionsmitel für Schokolade, das erhalten ist durch Extraktion von Hafer unter Einsatz eines zulässigen nichtpolaren organischen Lösungsmittels ; Nachextraktion des Hafers unter Einsatz eines zulässigen polaren Lösungsmittels unter Bildung eines polaren Lösungsmittelextrakts ; und Abtrennen eines Öls aus dem polaren Lösungsmittelextrakt.

14. Schokolademasse, enthaltend ein Viskositäts-Reduktionsmittel nach Anspruch 13.

15. Verfahren zur Herstellung eines Viskositäts-Reduktionsmittels, **gekennzeichnet durch** die folgenden Schritte :

Extrahieren von Hafer unter Einsatz eines zulässigen aliphatischen Alkohols mit wenigstens zwei Kohlenstoffatomen unter Bildung eines Alkoholextrakts, Extrahieren des Alkoholextrakts mit Methanol unter Bildung eines Methanolextrakts und Verdampfen von Methanol aus dem Methanolextrakt unter Erhalt des Viskositäts-Reduktionsmittels.

16. Verfahren nach Anspruch 15, **dadurch gekennzeichnet**, daß der aliphatische Alkohol mit wenigstens 2 Kohlenstoffatomen Ethanol ist.

17. Verfahren nach Anspruch 15, **dadurch gekennzeichnet**, daß der aliphatische Alkohol mit wenigstens 2 Kohlenstoffatomen Isopropanol ist.

18. Viskositäts-Reduktionsmittel, das erhalten ist durch das Verfahren nach einem der Ansprüche 15, 16 oder 17 und das wenigstens ein rheologisch aktives Glycolipid der folgenden allgemeinen Formel enthält :

$$\begin{array}{l} CH_2-O-R_1 \\ | \\ CH-O-R_2 \\ | \\ CH_2-O-R_3 \end{array}$$

wobei $R_1$ ein Digalactosylrest ist und $R_2$ und $R_3$, die gleich oder verschieden sein können, jeweils ein Fettsäurerest ist, mit der Maßgabe, daß wenigstens entweder $R_2$ oder $R_3$ ein ungesättigter Hydroxyfettsäurerest ($F_1$) ist, der durch seine Hydroxygruppe mit einem weiteren Fettsäurerest ($F_2$) verestert ist, der selbst ungesättigt sein und seinerseits eine Hydroxygruppe haben kann, die fakultativ durch einen anderen Fettsäurerest ($F_3$) verestert ist ;

wobei der Fettsäurerest $F_3$ eine gesättigte Fettsäure sein kann ;
und $F_1$ und $F_2$ gleich sein können ;
und in dem Fall, daß nur $R_2$ oder $R_3$ wie oben definiert ist, das jeweils andere von $R_2$ und $R_3$ auf der gleichen Fettsäure wie $F_1$ basieren kann, obwohl es kein Hydroxysäurerest zu sein braucht.

19. Viskositäts-Reduktionsmittel nach Anspruch 18, **dadurch gekennzeichnet**, daß $R_2$ und $R_3$ jeweils ein ungesättigter Fettsäurerest ist.

**Revendications**

1. Composition de chocolat contenant un agent de réduction de la viscosité que l'on peut obtenir par extraction à partir d'avoine en utilisant un solvant polaire réglementaire pour produire un extrait du solvant polaire et séparation d'une huile à partir de l'extrait du solvant polaire, ladite huile étant l'agent de réduction de la viscosité.

2. Composition de chocolat selon la revendication 1, dans laquelle le solvant polaire réglementaire est un alcool aliphatique.

3. Composition de chocolat selon la revendication 1, dans laquelle le solvant polaire réglementaire est l'éthanol ou le propanol.

4. Composition de chocolat selon les revendications 1, 2 ou 3, dans laquelle l'extrait du solvant polaire est extrait avec un solvant polaire différent, suivi de l'évaporation de ce dernier.

5. Composition de chocolat selon la revendication 4, dans laquelle ledit solvant polaire différent est le méthanol.

6. Procédé pour préparer une composition de chocolat, comprenant l'incorporation dans un mélange de sucre, de pâte de cacao non grasse et de beurre de cacao et, éventuellement une matière grasse végétale, des matières lactées non grasses et des graisses lactées, une quantité nécessaire d'un agent de réduction de viscosité que l'on peut obtenir par extraction à partir d'avoine en utilisant un solvant polaire réglementaire pour produire un extrait du solvant polaire et séparation d'une huile à partir de l'extrait du solvant polaire, ladite huile étant l'agent de réduction de la viscosité.

7. Procédé pour préparer un agent de réduction de la viscosité pour du chocolat, comprenant les étapes d'extraction à partir d'avoine en utilisant un solvant organique non polaire réglementaire, nouvelle extraction de l'avoine en utilisant un solvant polaire réglementaire pour produire un extrait du solvant polaire et séparation de l'huile dudit extrait du solvant polaire.

8. Procédé selon la revendication 7, selon lequel le solvant non polaire est un alcane réglementaire.

9. Procédé selon la revendication 8, selon lequel l'alcane réglementaire est l'hexane.

10. Procédé selon l'une quelconque des revendications 7 à 9, selon lequel le solvant non polaire est un alcool aliphatique réglementaire.

11. Procédé selon la revendication 10, selon lequel l'alcool aliphatique est l'éthanol ou l'isopropanol.

12. Procédé selon l'une quelconque des revendications 7 à 11, selon lequel l'huile est séparée du solvant organique polaire par évaporation partielle du solvant de l'extrait du solvant, jusqu'à ce que l'huile se sépare de ce dernier.

13. Agent de réduction de viscosité pour du chocolat que l'on peut obtenir par extraction à partir d'avoine en utilisant un solvant organique non polaire réglementaire ; nouvelle extraction de l'avoine en utilisant un solvant polaire réglementaire pour produire un extrait du solvant polaire ; et séparation d'une huile à partir de l'extrait du solvant polaire.

14. Composition de chocolat contenant un agent de réduction de la viscosité selon la revendication 13.

15. Procédé pour la préparation d'un agent de réduction de la viscosité comprenant les étapes d'extraction à partir d'avoine utilisant un alcool aliphatique réglementaire ayant au moins 2 atomes de carbone, pour conduire à un extrait alcoolique, extraction de l'extrait alcoolique avec du méthanol pour conduire à un extrait méthanolique, et évaporation du méthanol de l'extrait méthanolique pour conduire à l'agent de réduction de la viscosité.

16. Procédé selon la revendication 15, selon lequel l'alcool aliphatique ayant au moins deux carbones est l'éthanol.

17. Procédé selon la revendication 15, selon lequel l'alcool aliphatique ayant au moins deux carbones est l'isopropanol.

18. Agent de réduction de la viscosité qui peut être obtenu par le procédé selon les revendications 15, 16 ou 17, ledit agent contenant au moins un glycolipide rhéologiquement actif ayant la formule générale :

$$
\begin{array}{l}
CH_2 - O - R^1 \\
\,| \\
CH - O - R^2 \\
\,| \\
CH_2 - O - R^3
\end{array}
$$

dans laquelle R est un résidu digalactosyle et chacun de $R^2$ et $R^3$, $R^2$ et $R^3$ pouvant être les mêmes ou différents, est un résidu d'acide gras ; à condition qu'au moins un de $R^2$ et $R^3$ soit un résidu d'acide gras hydroxylé insaturé ($F_1$) dont le groupement hydroxylé est estérifié par un autre résidu d'acide gras ($F_2$) qui peut lui-même être insaturé et qui à son tour peut avoir un groupement hydroxyle éventuellement estérifié par un autre résidu d'acide gras ($F_3$) ;

le résidu d'acide gras $F_3$ peut être un acide gras saturé ;

$F_1$ et $F_2$ peuvent être les mêmes ;

dans le cas où un seul de $R^2$ et $R^3$ est tel que défini ci-dessus, l'autre de $R^2$ et $R^3$ peut être basé sur le même acide gras que $F_1$, bien qu'il n'ait pas besoin d'être un résidu d'acide hydroxylé.

19. Agent de réduction de viscosité selon la revendication 18, selon lequel chacun de $R^2$ et $R^3$ est un résidu d'acide gras insaturé.